# EUROPEAN PATENT SPECIFICATION

(11) **EP 3 492 705 B1**
(45) Date of publication and mention of the grant of the patent: **10.11.2021**
(21) Application number: 17204992.6
(22) Date of filing: 01.12.2017
(51) Int. Cl.: F01D 11/02, F16J 15/44

(54) **FILM-RIDING SEALING SYSTEM**
FLUIDFILM-DICHTUNGSSYSTEM
SYSTÈME D'ÉTANCHÉITÉ À FILM FLUIDE

(43) Date of publication of application: 05.06.2019
(73) Proprietor: General Electric Technology GmbH, 5400 Baden (CH)
(72) Inventor: TIBOS, Stacie Mark, Rugby, Warwickshire CV21 2NH GB (GB); GEORGAKIS, Christos, Rugby, Warwickshire CV21 2NH GB (GB)
(74) Representative: BRP Renaud & Partner mbB Rechtsanwälte Patentanwälte Steuerberater

(56) References cited:
- EP-A1- 3 018 298
- WO-A1-2004/053365
- US-A1- 2008 265 513
- US-A1- 2011 133 410
- US-A1- 2014 062 024
- US-A1- 2014 119 912
- US-A1- 2016 069 269
- US-A1- 2016 130 963
- US-A1- 2017 248 236
- US-B1- 7 216 871

## Description

### BACKGROUND

The field of the disclosure relates generally to sealing systems for machines, and more particularly to film-riding seals for a rotary machine.

US 2016/0130963 A1 describes a seal that comprises a base, a pair of beams, wherein one of the beams is mounted to or integrally formed with the base and the opposite end thereof is connected to a first stop, the first stop includes a strip which is connected to a shoe.

US 2011/0133410 A1 discloses a sealing assembly with at least one sealing ring, each sealing ring comprising a plurality of adjacent sealing pads having a sealing surface, wherein each sealing ring comprises a spring structure coupling each sealing pad to the main body of the sealing ring. The spring structure biases the associated sealing pads towards the counter surface linearly away from the main body of the sealing ring.

US 7 216 871 B1 discloses a non-contacting seal, the seal comprising at least one segment including an inner pad spaced from an outer support member and at least one finger spring connecting the inner pad and the outer support member. The inner pad may be formed as a single, unitary member with finger springs.

At least some known rotary machines include at least one rotor assembly coupled to a rotor shaft. The rotor assembly includes a plurality of circumferentiallyspaced blades that extend radially outward to define a stage of the rotary machine. For example, but not by way of limitation, the rotor assembly is part of a steam turbine, or part of a compressor or turbine section of a gas turbine engine. A casing surrounds at least a portion of the rotor assembly. Some known casings include at least some type of sealing system surrounding the rotor shaft to facilitate sealing against leakage of a working fluid between the rotor shaft and the casing. At least some known sealing systems include circumferentially disposed film-riding seal segments coupled to the casing and configured to reduce a clearance gap between the film-riding seal segment and the rotor shaft to facilitate sealing the rotor shaft.

In some known rotary machines, a pre-set clearance gap is defined between the film-riding seal segments and the outer surface of the rotor shaft to enable assembly of the rotary machine and to account for dimensional changes of the rotor shaft, casing, and film-riding seal segments during operation of the turbine. However, leakage resulting from the pre-set clearance gap may limit an efficiency of at least some rotary machines. As such, at least some known film-riding seal segments include at least a portion of the seal that may flex to move radially inward and outward relative to the surface of the rotor shaft to facilitate maintaining a relatively small clearance gap. However, at least some film-riding seal segments incorporating flexible features may exhibit dynamic instability and yawing of the sealing element relative to the rotor shaft surface during operation and/or may have limited effectiveness in reducing flow path leakage.

### BRIEF DESCRIPTION OF THE INVENTION

According to the present invention, a rotary machine is provided as set forth in claim 1. The machine includes a rotor, a casing extending circumferentially around the rotor, and a sealing system disposed radially inwardly of the casing and circumferentially around the rotor. The sealing system includes a plurality of film-riding seal segments. At least one of the film-riding seal segments includes a circumferentially extending base coupled to the casing, and a support member extending radially inward from the stationary seal body to a radially inner end. The at least one of the film-riding seal segments also includes a pair of flexible arms extending in circumferentially opposite directions from the radially inner end of the support member to a respective circumferentially outer end, and a circumferentially extending seal pad disposed radially inward from the pair of flexible arms and defining a first gap therebetween. The seal pad is coupled to the pair of flexible arms proximate the respective circumferentially outer ends.

### BRIEF DESCRIPTION OF THE DRAWINGS

FIG. 1 is a schematic view of an exemplary rotary machine;
FIG. 2 is a perspective view of an embodiment of a film-riding seal segment that may be used with a sealing system of the rotary machine shown in FIG. 1;
FIG. 3 is a perspective view of an embodiment of the film-riding seal segment shown in FIG. 2 illustrating a groove and a feed channel according to a first aspect of the invention;
FIG. 4 is a front view of the film-riding seal segment shown in FIG. 2;
FIG. 5 is a cross-section of a downstream portion of the film-riding seal segment shown in FIG. 2 taken along lines 5-5 shown in FIG. 4;
FIG. 6 is a cross-section of an exemplary secondary seal that may be used with the film-riding seal segment shown in FIG. 2;
FIG. 7 is a side view of the secondary seal shown in FIG. 6;
FIG. 8 is a plan view of the secondary seal shown in FIG. 6; and
FIG. 9 is a perspective view of an alternative embodiment of the film-riding seal segment shown in FIG. 3 illustrating angled grooves according to a second aspect of the invention.

### DETAILED DESCRIPTION

The embodiments described herein overcome at least some of the disadvantages of known film-riding seals. The embodiments include a seal segment including a stationary body and a seal pad coupled to the stationary body via flexible arms. The flexible arms enable the seal pad to be radially compliant to radial movements of the rotor. A secondary seal is arranged to create a damping force on radial movement of the seal pad relative to the stationary body, further improving a dynamic performance of the seal. Additionally or alternatively, the seal pad has a divergent section adjacent to the trailing edge. The divergent section facilitates cooperating with a non-divergent portion of the seal pad to allow the seal pad to set at a clearance at which hydrostatic film-riding forces and hydrodynamic film-riding forces between the seal pad and rotor complement each other to facilitate improving performance of the seal segment. In at least some embodiments, working fluid leakage reduction between the rotor and a casing is achieved without modifying the existing rotor and/or casing.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

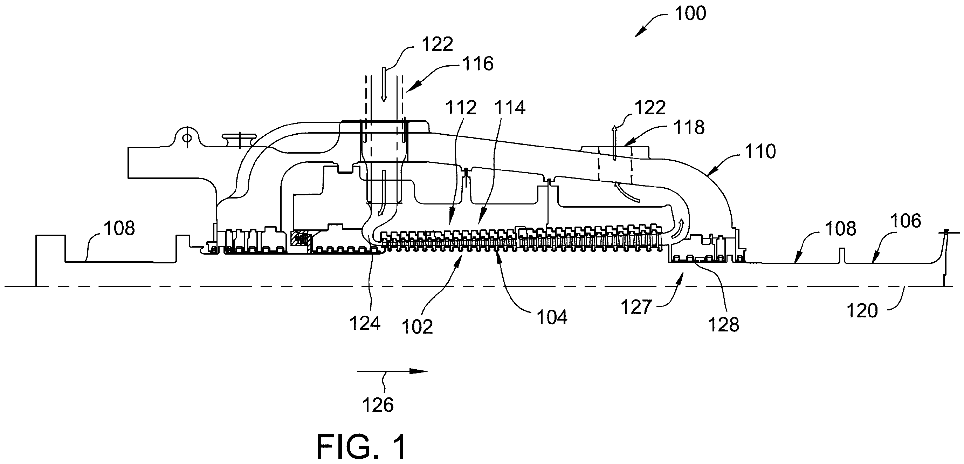

FIG. 1 is a schematic view of an exemplary rotary machine 100. In the illustrated example, rotary machine 100 is a single-flow steam turbine. In alternative examples, rotary machine 100 is an opposed-flow steam turbine. Moreover, the present embodiments are not limited to only being used in steam turbines, but rather can be used in other rotary machine systems, such as gas turbines. Alternatively, rotary machine 100 is any other turbine engine and/or rotary machine, including, without limitation, a gas turbofan aircraft engine, other aircraft engine, a wind turbine, a compressor, a pump, and/or any other machine.

In the illustrated example, rotary machine 100 includes a plurality of stages 102. Each stage 102 includes a plurality of rotor blades 104 coupled to a rotor 106. It should be noted that, as used herein, the term "couple" is not limited to a direct mechanical, electrical, and/or communication connection between components, but may also include an indirect mechanical, electrical, and/or communication connection between multiple components. Rotor blades 104 of each stage 102 are disposed circumferentially around, and extend radially outward from, rotor 106. Each stage 102 includes any suitable number of rotor blades 104 that enables rotary machine 100 to operate as described herein. Rotor 106 is supported at opposing end portions 108 of rotor 106 by bearings (not shown).

A casing 110 surrounds plurality of stages 102. In the illustrated example, a plurality of diaphragms 112 is coupled to casing 110, such that a respective diaphragm 112 is positioned upstream of each stage 102. Each diaphragm 112 includes a row of partitions 114. Partitions 114 are generally airfoil shaped and are disposed circumferentially around, and extend radially inward from, casing 110. Alternatively, any stationary vane or nozzle assembly, or no stationary vane or nozzle assembly, is disposed upstream of each stage 102.

Rotary machine 100 also includes a sealing system 127 disposed between casing 110 and rotor 106. Sealing system 127 includes a plurality of film-riding seal segments 128 coupled to casing 110. More specifically, the plurality of film-riding seal segments 128 extend radially inward from casing 110 and are disposed circumferentially around rotor 106. When rotary machine is not in operation, film-riding seal segments 128 extend to a predetermined clearance distance from an outer surface of rotor 106.

Rotary machine 100 includes a high pressure steam inlet 116 and a low pressure steam exhaust 118. Rotor 106 is rotatable about a centerline axis 120. During operation, high-pressure and high-temperature steam 122 is channeled from a steam source, such as a boiler or the like (not shown), through high pressure steam inlet 116 into a working fluid path 124, in a downstream direction 126 through casing 110, where it encounters rotor blades 104. As the steam impacts rotor blades 104, it induces rotation of rotor 106 about centerline axis 120. Thus, thermal energy of steam 122 is converted to mechanical rotational energy by stages 102. Mechanical rotational energy of rotor 106 may be used to drive a load such as, but not limited to, an electrical generator and/or a mechanical drive application. Steam 122 exits casing 110 at low pressure steam exhaust 118. Steam 122 is then channeled to the boiler (not shown), where it is reheated, and/or to other components of the system, for example, a low pressure turbine section or a condenser (not shown). Alternatively, rotor blades 104 are included in a turbine section or compressor section of a gas turbine (not shown), or in any suitable rotary machine, as discussed above. For example, but not by way of limitation, the working fluid delivered to the turbine section may be combustion gases.

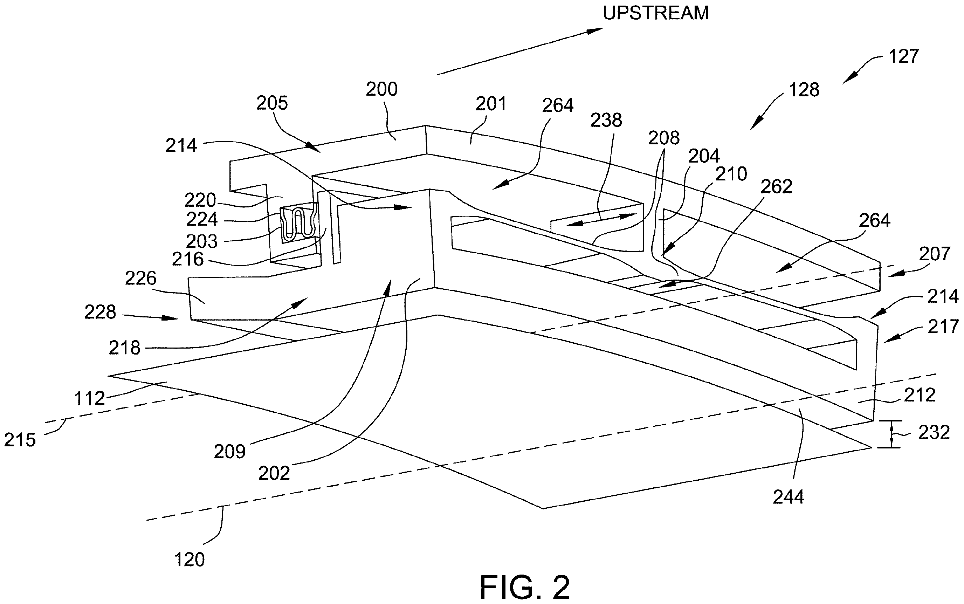

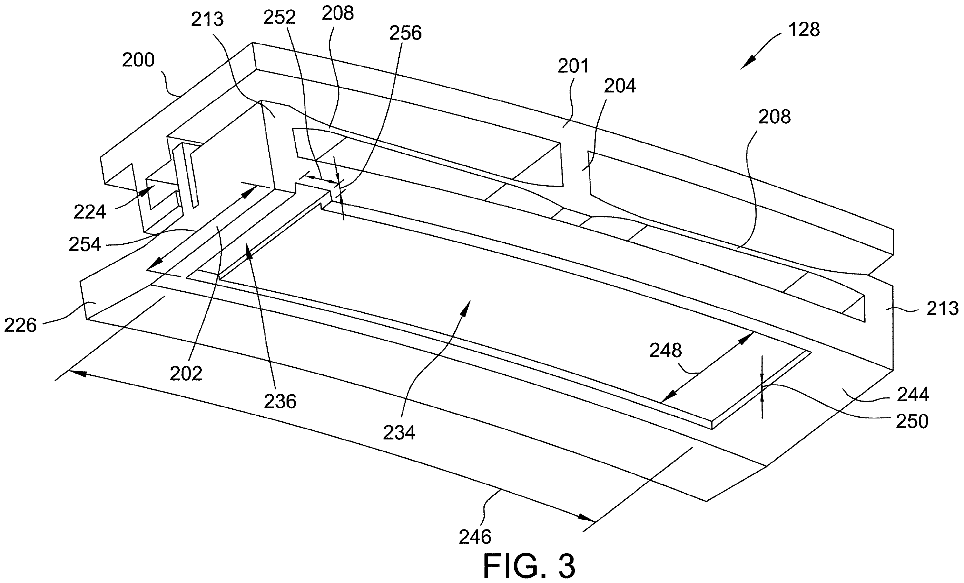

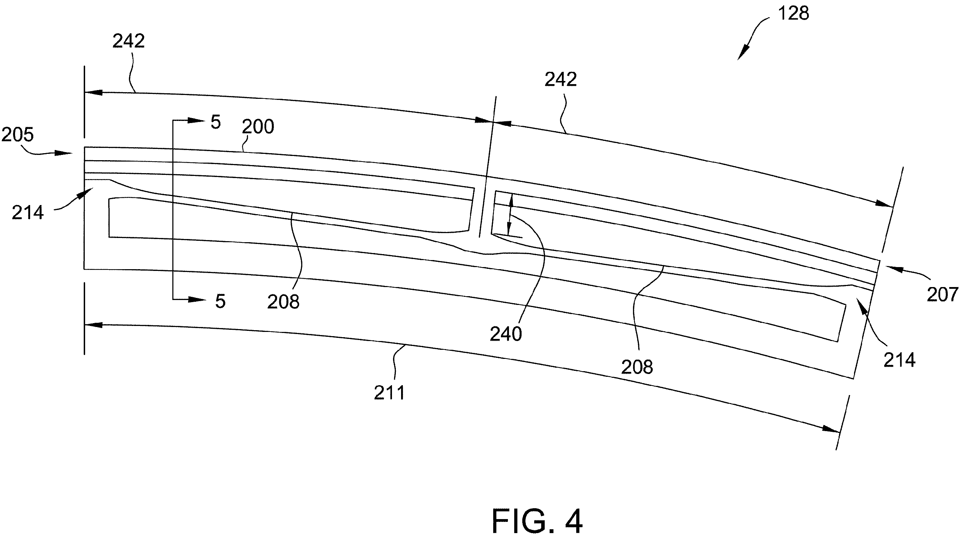

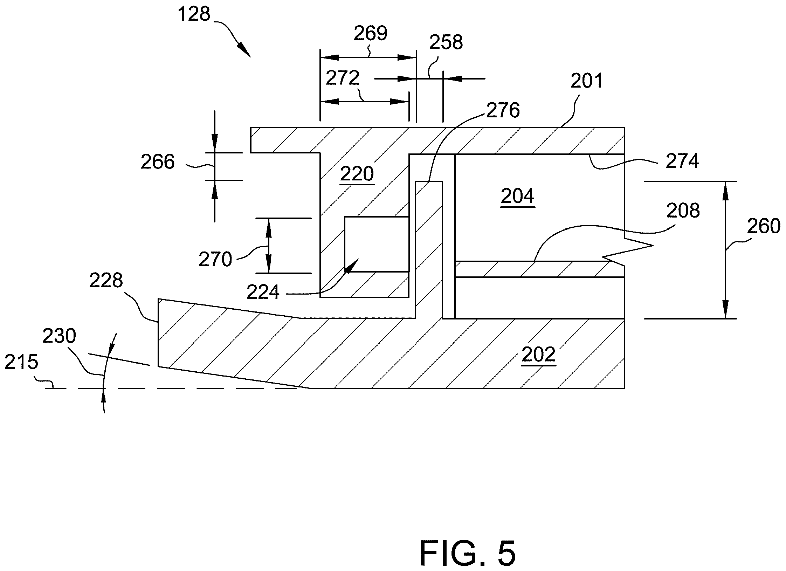

FIG. 2 is a perspective view of an embodiment of a film-riding seal segment 128 that may be used with sealing system 127 for the rotary machine 100 shown FIG. 1. FIG. 3 is a perspective view of an embodiment of the film-riding seal segment 128 (shown in FIG. 2) illustrating a groove 234 and a feed channel 236 according to a first aspect of the invention. FIG. 4 is a front view of film-riding seal segment 128 (shown in FIG. 2). FIG. 5 is a cross-section of a downstream portion of film-riding seal segment 128 (shown in FIG. 2) taken along lines 5-5 shown in FIG. 4. With reference to FIGs. 2-5, film-riding seal segment 128 includes a stationary seal body 200 and a seal pad 202 configured to extend radially between casing 110 and rotor 106. Moreover, sealing system 127 includes a secondary seal 203 coupled between stationary seal body 200 and seal pad 202 of each film-riding seal segment 128. Sealing system 127 is configured to facilitate inhibiting leakage of working fluid from working fluid path 124 past seal pad 202 and secondary seal 203, and between seal pad 202 and rotor 106.

According to the invention, stationary seal body 200 includes a radially outer base 201, an axially extending support member 204, a pair of flexible arms 208, and a secondary seal retention member 220. Seal pad 202 includes a primary sealing extension 216.

In the illustrated embodiment, base 201 of stationary seal body 200 is configured to be coupled to casing 110 and extends circumferentially between a stationary body first end 205 and a stationary body second end 207. Support member 204 extends radially inward from a generally mid-portion of base 201 to a radially inner end 210 over a support height 240, and extends axially along base 201 over a support length 238. A pair of flexible arms 208 extend in circumferentially opposite directions from radially inner end 210 of support member 204 to a respective circumferentially outer end 214. In an example, pair of flexible arms 208 are substantially symmetric about support member 204, such that each arm 208 extends over a substantially identical length 242. In alternative examples, pair of flexible arms 208 are other than substantially symmetric about support member 204.

In the illustrated embodiment, seal pad 202 is disposed radially inward from pair of flexible arms 208 and extends circumferentially between a seal pad first end 209 and a seal pad second end 217. Seal pad 202 is coupled to each of flexible arms 208 proximate the respective circumferentially outer end 214 of each of flexible arms 208. For example, seal pad 202 is coupled directly to the respective circumferentially outer end 214 of each of flexible arms 208 via radially extending connecting portions 213. In alternative examples, connecting portions 213 are offset slightly circumferentially inward from the respective circumferentially outer end 214 of each of flexible arms 208. In other alternative examples, seal pad 202 is coupled to each of flexible arms 208 proximate the respective circumferentially outer ends 214 of flexible arms 208 in any suitable fashion that enables film-riding seal segment 128 to function as described herein. In an example, seal pad first end 209 is radially aligned with stationary body first end 205, and seal pad second end 217 is radially aligned with stationary body second end 207. In an alternative example, seal pad first end 209 and/or stationary body first end 205 are configured to sealingly interface with seal pad second end 217 and/or seal body second end 207, respectively, of a laterally adjacent film-riding seal segment 128 to facilitate inhibiting inter-segment leakage. In alternative examples, seal pad first end 209 is other than radially aligned with stationary body first end 205, and/or seal pad second end 217 is other than radially aligned with stationary body second end 207.

A first flow path is defined between a radially inner face 244 of seal pad 202 and an outer surface of rotor 106. A first gap 262 is defined between a radially outer surface of seal pad 202 and a radially inward surface of pair of flexible arms 208. A pair of third flow paths 264 are defined between a respective radially outward surface of each flexible arm 208 and a radially inward surface of stationary seal body 200, and separated by support member 204.

In the illustrated embodiment, seal pad 202 has a circumferential width 211 and has a longitudinal axis 215 parallel to centerline axis 120 of rotary machine 100 (shown in FIG. 1). Flexible arms 208 are configured to flex to allow radial movement of seal pad 202 relative to base 201 and rotor 106. More specifically, each flexible arm 208 is configured to be substantially rigid in the axial direction and substantially compliant in the radial direction. Moreover, the respective circumferentially outer end 214 of each flexible arm 208 is configured for radial movement independently of the other flexible arm 208. Flexible arms 208 thus are configured to cooperate with seal pad 202 to facilitate aligning seal pad 202 with rotor 106, and to inhibit seal pad 202 from tilting axially relative to centerline axis 120 throughout a radial range of motion of seal pad 202, facilitating reducing the operational clearance between seal pad 202 and rotor 106. In alternative examples, each flexible arm 208 may be configured in any suitable manner that enables film-riding seal segment 128 to function as described herein..

In the embodiment shown in Fig. 3, seal pad 202 includes a single groove 234 defined in radially inner face 244 of seal pad 202. More specifically, groove 234 extends radially outward from radially inner face 244 and is configured to facilitate retaining fluid between seal pad 202 and rotor 106. Groove 234 extends circumferentially over a groove width 246, axially over a groove length 248, and radially outward into seal pad 202 by a groove depth 250. A feed channel 236 also is defined in radially inner face 244 of seal pad 202 in flow communication with groove 234. More specifically, feed channel 236 extends through, and axially downstream from, leading face 212 of seal pad 202 and is configured to direct fluid from upstream of seal pad 202 into groove 234.

In the illustrated embodiment, feed channel 236 extends circumferentially over a feed channel width 252, axially over a feed channel length 254, and radially outward into seal pad 202 by a feed channel depth 256. In the present example, feed channel depth 256 is greater than groove depth 250. In alternative examples, feed channel depth 256 is less than or equal to groove depth 250. In the present example, groove width 246 is at least eighty percent of a width of seal pad 202, and feed channel width 252 is less than twenty percent of the width of seal pad 202. In alternative examples, groove width 246 and feed channel width 252 have any suitable values that enable film-riding seal segment 128 to function as described herein.

In the illustrated embodiment, seal pad 202 also includes a divergent section 226 extending axially downstream from a generally axially mid-portion of seal pad 202 to a trailing edge 228 of seal pad 202. More specifically, divergent section 226 is angled outward relative to longitudinal axis 215 of seal pad 202 at an angle 230. Angle 230 is selected to cooperate with the non-divergent portion of seal pad 202 to facilitate generating a hydrostatic film-riding force and a hydrodynamic film-riding force between seal pad 202 and rotor 106. More specifically, divergent section 226 facilitates enhancing hydrostatic forces between seal pad 202 and rotor 106 by causing a pressure drop in a volume of fluid between seal pad 202 and rotor 106 during operation of rotary machine 100. For example, hydrostatic film-riding forces may be created when a clearance between rotor 106 and seal pad 202 is greater than 100 micrometers, and hydrodynamic film-riding forces become effective when the clearance between rotor 106 and seal pad 202 is less than 100 micrometers. Divergent section 226 facilitates allowing seal pad 202 to set at a clearance of greater than 100 micrometers, thus using hydrostatic film-riding forces to control a bulk opening and closing of each film-riding seal segment 128 relative to rotor 106. Moreover, for example, if the clearance is dynamically reduced to less than 100 micrometers for any reason during operation, film-riding seal segment 128 facilitates creation of a buffer from hydrodynamic forces to avoid contact between film-riding seal segment 128 and rotor 106.

In some embodiments, angle 230 is selected to be in a range of between about zero degrees and about fifteen degrees, for example facilitating generating a hydrostatic film-riding force between seal pad 202 and rotor 106. In some such embodiments, angle 230 is selected to be in a range of between about three degrees and about eight degrees, for example further facilitating generating a hydrostatic film-riding force between seal pad 202 and rotor 106. In alternative examples, angle 230 is selected to have any suitable value that enables sealing system 127 to function as described herein. In other alternative examples, film-riding seal segment 128 does not include divergent section 226.

In the illustrated embodiment, a primary sealing extension 216 extends radially outward and circumferentially from another generally axial mid-portion 218 of seal pad 202, axially downstream from flexible arms 208. Primary sealing extension 216 extends circumferentially along width 211 of seal pad 202, axially by a thickness 258, and radially outward from seal pad 202 by a height 260. A primary extension gap 266 is defined between a radially outer face 276 of primary sealing extension 216 and a radially inward face 274 of base 201. Primary extension gap 266 represents the distance that seal pad 202 may travel in a radially outward direction away from rotor 106 during operation of rotary machine 100 before contacting stationary seal body 200. Primary sealing extension 216 is configured to facilitate inhibiting a portion of the working fluid from leaking past film-riding seal segment 128 by passing through first gap 262 and/or third flow paths 264, by directing the portion of the working fluid to secondary seal 203.

Secondary seal retention member 220 extends radially inward from stationary seal body 200 axially adjacent to, and axially downstream of, primary sealing extension 216, such that secondary seal retention member 220 and primary sealing extension 216 cooperate to define a secondary seal retention cavity 224. In an alternative example, secondary seal retention member 220 may extend radially inward from stationary seal body 200 axially adjacent to, and axially upstream of, primary sealing extension 216, such that secondary seal retention member 220 and primary sealing extension 216 cooperate to define a secondary seal retention cavity 224. Retention cavity 224 is configured to facilitate retaining secondary seal 203. Retention cavity 224 has a radially extending retention cavity height 270 and an axially extending retention cavity length 269. In the illustrated embodiment, retention cavity height 270 and a first portion 272 of axially extending retention cavity length 269 are defined within secondary seal retention member 220, and a remaining portion of axially extending retention cavity length 269 is defined by primary sealing extension 216. In alternative examples, secondary seal retention member 220 and primary sealing extension 216 cooperate to define retention cavity 224 in any suitable fashion that enables sealing system 127 to function as described herein.

In the illustrated embodiment, stationary seal body 200, support member 204, flexible arms 208, seal pad 202, primary sealing extension 216, and secondary seal retention member 220 are integrally formed together as a monolithic structure. In an alternative embodiment, stationary seal body 200, pair of flexible arms 208, seal pad 202, primary sealing extension 216, and secondary seal retention member 220 are other than integrally formed together as a monolithic structure.

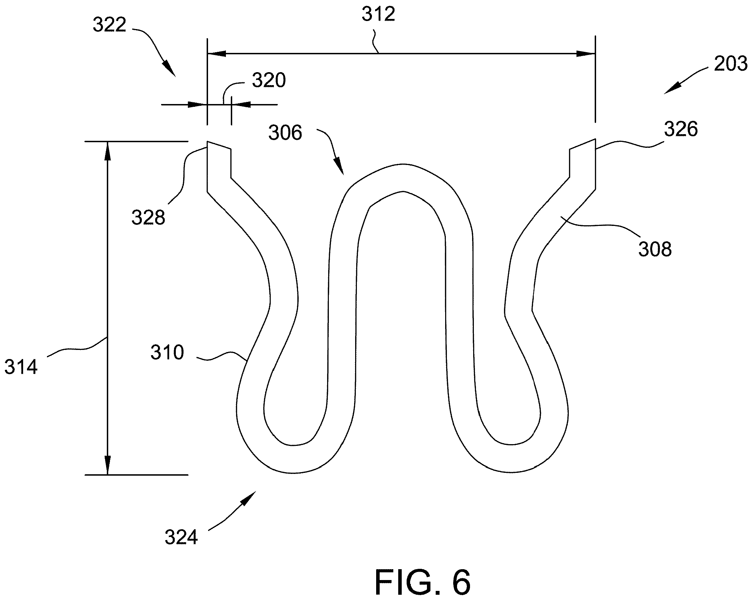

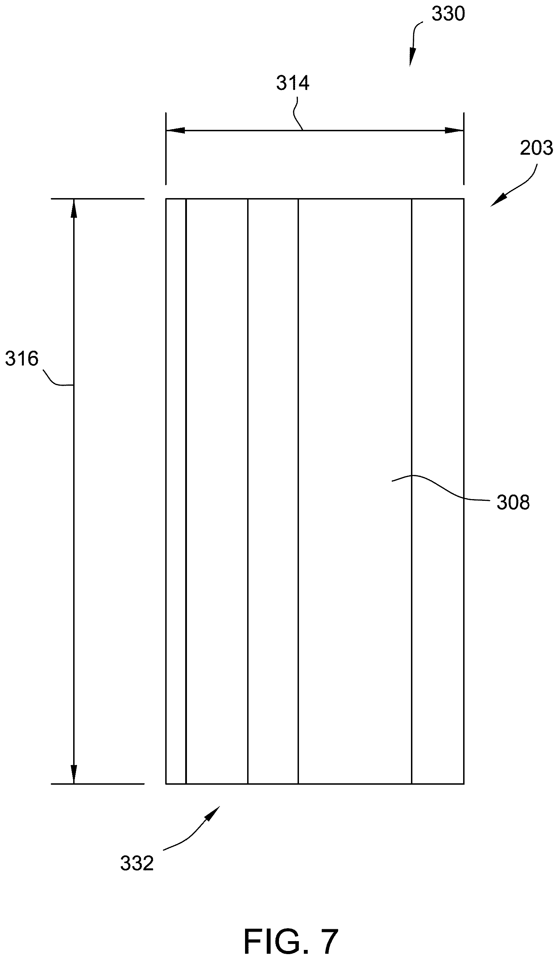

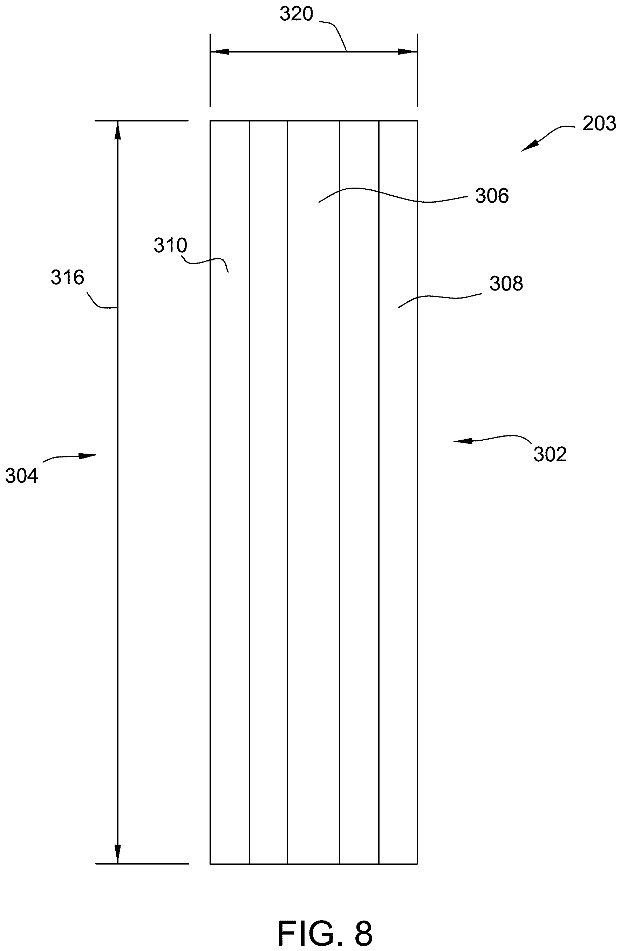

FIG. 6 is a cross-section of secondary seal 203 that may be used with film-riding seal segment 128 (shown in FIG. 2). FIG. 7 is a side view of secondary seal 203 (shown in FIG. 6). FIG. 8 is a plan view of secondary seal 203 (shown in FIG. 6). With reference to FIGs. 2 and 6-8, secondary seal 203 is sized and shaped to be retained by, and to extend between, secondary seal retention member 220 and primary sealing extension 216. In the illustrated example, secondary seal 203 includes a first leg 308, a second leg 310, and a u-shaped portion 306 extending therebetween. U-shaped portion 306 is located generally centrally between first leg 308 and second leg 310. Each of first leg 308, second leg 310, and u-shaped portion 306 has an approximately uniform thickness 320. In an alternative example, each of first leg 308, second leg 310, and u-shaped portion 306 may have a non-uniform thickness 320. In other alternative examples, secondary seal 203 is one of a c-seal and an o-ring-type seal. In alternative examples, secondary seal 203 has any suitable shape, size, and/or configuration that enables sealing system 127 to function as described herein.

The secondary seal 203 extends axially from a first end 326 to a second end 328 and, in an absence of external constraint, defines a resting width 312 therebetween. In the illustrated embodiment, resting width 312 is greater than retention cavity length 269. In addition, secondary seal 203 extends from a radially inner side 324 to a radially outer side 322 and defines a seal height 314 therebetween. The seal height 314 is approximately equal to retention cavity height 270 of retention cavity 224 to facilitate retaining secondary seal 203 within retention cavity 224. Secondary seal 203 also extends circumferentially between a first side 330 and a second side 332 and defines a circumferential length 316 therebetween. The circumferential length 316 is greater than circumferential width 211, such that secondary seal 203 extends circumferentially through retention cavity 224 of more than one film-riding seal segment 128. In alternative examples, secondary seal 203 is configured in any suitable manner that enables sealing system 127 to function as described herein.

The secondary seal 203 is resiliently deformable inwardly from resting width 312, such that first leg 308 and second leg 310 move toward each other and are receivable within retention cavity 224 during installation. Moreover, after insertion into retention cavity 224, secondary seal 203 is released such that first leg 308 and second leg 310 are biased back towards resting width 312, such that secondary seal 203 is compressed within retention cavity 224 to facilitate first leg 308 sealingly interfacing with an axially adjacent face of primary sealing extension 216 and second leg 310 sealingly interfacing with an axially adjacent face of secondary seal retention member 220.

Thus, secondary seal 203 retained in retention cavity 224 is configured to exert a force on primary sealing extension 216 in the axially upstream direction. The axial force exerted by secondary seal 203 on primary sealing extension 216 inhibits, via friction, radial motion of primary sealing extension 216, and thus of seal pad 202, relative to stationary seal body 200, thus providing a damping effect for radial motion of seal pad 202. Moreover, a magnitude of the damping effect of secondary seal 203 on seal pad 202 is selectable based on design parameters of secondary seal 203, such as resting width 312 and a spring constant of secondary seal 203, for example. Thus, secondary seal 203 is selectable to provide substantially critically damping of an expected radial movement of seal pad 202 relative to stationary seal body 200 during operation of rotary machine 100, thereby facilitating improved dynamic performance of film-riding seal segment 128. In alternative examples, secondary seal 203 provides other than substantially critical damping of radial motion of seal pad 202.

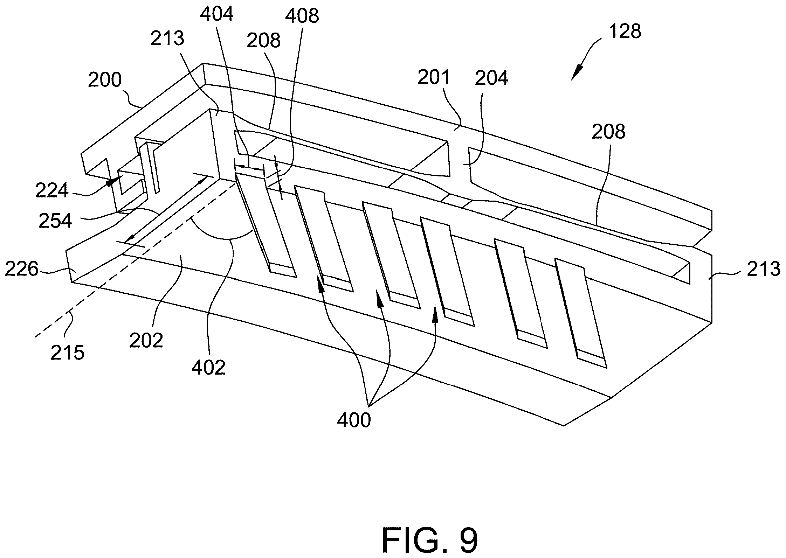

FIG. 9 is a perspective view of an alternative embodiment of film-riding seal segment 128 (shown in FIG. 3) illustrating angled grooves 400 according to a second aspect of the invention. The embodiment shown in FIG. 9 is substantially identical to the embodiment shown in FIG. 3, except seal pad 202 includes a plurality of angled grooves 400. In the illustrated example, seal pad 202 includes six angled grooves 400 defined in radially inner face 244 of seal pad 202. Angled grooves 400 extend radially outward from radially inner face 244 to a groove depth 408. Each angled groove 400 extends through leading face 212 of seal pad 202 over a groove width 404, such that fluid from upstream of seal pad 202 is directed into angled grooves 400. Moreover, angled grooves 400 extend axially downstream from leading face 212 of seal pad 202 at an angle 402 relative to longitudinal axis 215 of seal pad 202. Angled grooves 400 facilitate retaining fluid between seal pad 202 and rotor 106.

The above-described embodiments of sealing systems overcome at least some disadvantages of known film-riding seals. Specifically, the embodiments include a seal segment including a stationary body and a seal pad coupled to the stationary body via flexible arms. The flexible arms enable the seal pad to be radially compliant to radial movements of the rotor. A secondary seal is arranged to create a damping force on radial movement of the seal pad relative to the stationary body, further improving a dynamic performance of the seal. Additionally or alternatively, in certain embodiments, the seal pad has a divergent section adjacent to the trailing edge. The divergent section facilitates cooperating with a non-divergent portion of the seal pad to allow the seal pad to set at a clearance at which hydrostatic film-riding forces and hydrodynamic film-riding forces between the seal pad and rotor complement each other to facilitate improving performance of the seal segment. In at least some embodiments, working fluid leakage reduction between the rotor and a casing is achieved without modifying the existing rotor and/or casing.

Examples and embodiments of a film-riding seal segment and sealing system for a rotary machine are described above in detail. The systems and methods are not limited to the specific embodiments described herein, but rather, components of systems and/or steps of methods may be utilized independently and separately from other components and/or steps described herein. For example, the system may also be used in combination with other machines and methods, and is not limited to practice with only a steam turbine assembly as described herein. Rather, the embodiments can be implemented and utilized in connection with many other machine applications.

## Claims

1. A rotary machine (100) comprising:
a rotor (106);
a casing (110) extending circumferentially around said rotor (106) having an outer surface; and
a sealing system (127) disposed radially inwardly of said casing (110) and circumferentially around said rotor (106), said sealing system (127) comprising a plurality of film-riding seal segments (128), at least one of said film-riding seal segments (128) comprising:
a circumferentially extending stationary seal body (200) coupled to said casing (110) of the machine (100) and including a radially outer base (201) and a secondary seal retention member (220);
a support member (204) extending radially inward from a generally mid-portion of said base (201) to a radially inner end (210) and extending axially along the base (201);
a pair of flexible arms (208) extending in circumferentially opposite directions from said radially inner end (210) of said support member (204) to a respective circumferentially outer end (214);
a circumferentially extending seal pad (202) disposed radially inward from said pair of flexible arms (208) and defining a first gap (262) therebetween, said seal pad (202) coupled to said pair of flexible arms (208) proximate said respective circumferentially outer ends (214) and including a primary sealing extension (216); and
a secondary seal (203) coupled between the stationary seal body (200) and the seal pad (202), wherein
the sealing system (127) is configured to facilitate inhibiting leakage of working fluid from a working fluid path (124) of the rotary machine (100) past the seal pad (202) and the secondary seal (203), and between the seal pad (202) and the rotor (106), the working fluid path (124) being channeled through the rotary machine (100) in a downstream direction (126) through the casing (110),
a first leakage flow path is defined between a radially inner face (244) of the seal pad (202) and the outer surface of the rotor (106),
a pair of third flow paths (264) are defined between a respective radially outward surface of each flexible arm (208) and a radially inward surface of said stationary seal body (200) and are separated by the support member (204),
the primary sealing extension (216) extends radially outward and circumferentially from a generally axial mid-portion (218) of the seal pad (202), axially downstream from the flexible arms (208) and is configured to facilitate inhibiting a portion of the working fluid from leaking past film-riding seal segment (128) by passing through the first gap (262) and/or the third flow paths (264), by directing the portion of the working fluid to the secondary seal (203),
the secondary seal (203) is sized and shaped to be retained by, and to extend between, the secondary seal retention member (220) and the primary sealing extension (216),
the secondary seal retention member (220) extends radially inward from the base (210) axially adjacent to, and axially downstream of, the primary sealing extension (216), such that the secondary seal retention member (220) and the primary sealing extension (216) cooperate to define a secondary seal retention cavity (224),
the retention cavity (224) is configured to receive the secondary seal (203) therein, the seal pad (202) includes a groove (234, 400) defined in the radially inner face (244) of the seal pad (202) and configured to facilitate retaining working fluid between the seal pad (202) and the rotor (106),
**characterised in that**
either the groove (234, 400) is a single groove (234) that extends radially outward from the radially inner face (244),
the single groove (234) extends circumferentially over a groove width (246), axially over a groove length (248), and radially outward into the seal pad (202) by a groove depth (250), and
a feed channel (236) is defined in the radially inner face (244) of the seal pad (202) in flow communication with the groove (234) and extends through, and axially downstream from, a leading face (212) of the seal pad (202), said feed channel (236) configured to direct fluid from upstream of the seal pad (202) into the groove (234);
or **characterized in that**
the groove (234, 400) is a plurality of angled grooves (400) defined in the radially inner face (244) of the seal pad (202) and extending radially outward from the radially inner face (244) to a groove depth (408), and
each angled groove (400) extending through the leading face (212) of the seal pad (202) over a groove width (404), such that fluid from upstream of the seal pad (202) is directed into the angled grooves (400), wherein
the angled grooves (400) extend axially downstream from the leading face (212) of the seal pad (202) at an angle (402) relative to a longitudinal axis (215) of the seal pad (202);
wherein the seal pad (202) includes a divergent section (226) extending axially downstream from another generally axially mid-portion of the seal pad (202) to a trailing edge (228) of the seal pad (202), and wherein
the divergent section (226) is angled outward relative to the longitudinal axis (215) of the seal pad (202) at an angle (230).

2. The rotary machine (100) according to claim 1, wherein said stationary seal body (200), said support member (204), said pair of flexible arms (208), said seal pad (202), said primary sealing extension (216), and said secondary seal (202) retention member (220) are integrally formed.

3. The rotary machine (100) according to claim 1, wherein said primary sealing extension (216) is configured to receive an axial force from the secondary seal (203) when the secondary seal (203) is received in said retention cavity (224), such that radial movement of said seal pad (202) relative to said stationary seal body (200) is damped.

4. The rotary machine (100) according to claim 1, wherein said angle (230) is in a range between about zero degrees and about fifteen degrees.

5. The rotary machine (100) according to claim 1, wherein said angle (230) is in a range between about three degrees and about eight degrees.

6. The rotary machine (100) according to claim 1, wherein said stationary seal body (200) extends circumferentially from a first end (209) to a second end (217), and said seal pad (202) extends circumferentially between a first end (205) and a second end (207) of said stationary seal body (200).

## Patentansprüche

1. Rotationsmaschine (100), umfassend:
einen Rotor (106);
ein Gehäuse (110), das sich in Umfangsrichtung um den Rotor (106) erstreckt und eine Außenoberfläche aufweist; und
ein Dichtungssystem (127), das radial einwärts von dem Gehäuse (110) und in Umfangsrichtung um den Rotor (106) angeordnet ist, wobei das Dichtungssystem (127) eine Vielzahl von Fluidfilm-Dichtungssegmenten (128) umfasst, wobei mindestens eines der Fluidfilm-Dichtungssegmente (128) umfasst:
einen sich in Umfangsrichtung erstreckenden stationären Dichtungskörper (200), der mit dem Gehäuse (110) der Maschine (100) gekoppelt ist und eine radial äußere Basis (201) und ein Sekundärdichtungshalteelement (220) aufweist;
ein Stützelement (204), das sich von einem im Allgemeinen mittleren Abschnitt der Basis (201) zu einem radial inneren Ende (210) radial einwärts erstreckt und sich axial entlang der Basis (201) erstreckt;
ein Paar flexible Arme (208), die sich in in Umfangsrichtung entgegengesetzten Richtungen von dem radial inneren Ende (210) des Stützelements (204) zu einem jeweiligen in Umfangsrichtung äußeren Ende (214) erstrecken;
ein sich in Umfangsrichtung erstreckendes Dichtungskissen (202), das radial einwärts von dem Paar flexible Arme (208) angeordnet ist und einen ersten Spalt (262) zwischen diesen definiert, wobei das Dichtungskissen (202) mit dem Paar flexible Arme (208) nahe den jeweiligen in Umfangsrichtung äußeren Enden (214) gekoppelt ist, und eine Primärdichtungsverlängerung (216) einschließt; und
eine Sekundärdichtung (203), die zwischen dem stationären Dichtungskörper (200) und dem Dichtungskissen (202) angeordnet ist, wobei
das Dichtungssystem (127) konfiguriert ist, um das Verhindern der Leckage von Arbeitsfluid aus einem Arbeitsfluidweg (124) der Rotationsmaschine (100) an dem Dichtungskissen (202) und der Sekundärdichtung (203) vorbei und zwischen dem Dichtungskissen (202) und dem Rotor (106) vorbei zu ermöglichen, wobei der Arbeitsfluidweg (124) durch die Rotationsmaschine (100) in einer Stromabwärtsrichtung (126) durch das Gehäuse (110) kanalisiert wird,
ein erster Leckageströmungsweg zwischen einer radial inneren Fläche (244) des Dichtungskissens (202) und der Außenoberfläche des Rotors (106) definiert ist,
ein Paar dritte Strömungswege (264) zwischen einer jeweiligen radial äußeren Oberfläche jedes flexiblen Arms (208) und einer radial inneren Oberfläche des stationären Dichtungskörpers (200) definiert ist und durch das Stützelement (204) getrennt ist,
die Primärdichtungsverlängerung (216) sich radial auswärts und in Umfangsrichtung von einem im Allgemeinen axialen Mittelabschnitt (218) des Dichtungskissens (202) axial stromabwärts von den flexiblen Armen (208) erstreckt und konfiguriert ist, um zu ermöglichen, dass ein Teil des Arbeitsfluids am Fluidfilm-Dichtungssegment (128) vorbei leckt, indem er durch den ersten Spalt (262) und/oder die dritten Strömungswege (264) strömt, indem sie den Teil des Arbeitsfluids zu der Sekundärdichtung (203) leitet,
die Sekundärdichtung (203) so bemessen und geformt ist, dass sie von dem Sekundärdichtungshalteelement (220) und der Primärdichtungsverlängerung (216) gehalten wird und sich zwischen diesen erstreckt,
das Sekundärdichtungshalteelement (220) sich von der Basis (210) axial benachbart zu und axial stromabwärts von der Primärdichtungsverlängerung (216) radial einwärts erstreckt, sodass das Sekundärdichtungshalteelement (220) und die Primärdichtungsverlängerung (216) zusammenwirken, um einen Sekundärdichtungshaltehohlraum (224) zu definieren,
der Haltehohlraum (224) konfiguriert ist, um die Sekundärdichtung (203) in sich aufzunehmen, wobei das Dichtungskissen (202) eine Nut (234, 400) einschließt, die in der radial inneren Fläche (244) des Dichtungskissens (202) definiert ist und konfiguriert ist, um das Halten von Arbeitsfluid zwischen dem Dichtungskissen (202) und dem Rotor (106) zu ermöglichen, **dadurch gekennzeichnet, dass**
entweder die Nut (234, 400) eine einzelne Nut (234) ist, die sich von der radial inneren Fläche (244) radial auswärts erstreckt,
die einzelne Nut (234) sich in Umfangsrichtung über eine Nutbreite (246), axial über eine Nutlänge (248) und radial auswärts in das Dichtungskissen (202) um eine Nuttiefe (250) erstreckt und
ein Zufuhrkanal (236) in der radial inneren Fläche (244) des Dichtungskissens (202) in Strömungsverbindung mit der Nut (234) definiert ist und sich durch eine vordere Fläche (212) des Dichtungskissens (202) und axial stromabwärts davon erstreckt, wobei der Zufuhrkanal (236) konfiguriert ist, um Fluid von stromaufwärts des Dichtungskissens (202) in die Nut (234) zu leiten; oder **dadurch gekennzeichnet, dass**
die Nut (234, 400) eine Vielzahl von abgewinkelten Nuten (400) ist, die in der radial inneren Fläche (244) des Dichtungskissens (202) definiert sind und sich von der radial inneren Fläche (244) bis zu einer Nuttiefe (408) radial auswärts erstrecken, und
wobei sich jede abgewinkelte Nut (400) durch die Vorderfläche (212) des Dichtungskissens (202) über eine Nutbreite (404) erstreckt, sodass Fluid von stromaufwärts des Dichtungskissens (202) in die abgewinkelten Nuten (400) geleitet wird, wobei
die abgewinkelten Nuten (400) sich axial stromabwärts von der Vorderfläche (212) des Dichtungskissens (202) in einem Winkel (402) relativ zu einer Längsachse (215) des Dichtungskissens (202) erstrecken;
wobei das Dichtungskissen (202) einen divergierenden Abschnitt (226) aufweist, der sich axial stromabwärts von einem anderen im Allgemeinen axial mittleren Abschnitt des Dichtungskissens (202) zu einer Hinterkante (228) des Dichtungskissens (202) erstreckt, und wobei
der divergierende Abschnitt (226) in Bezug auf die Längsachse (215) des Dichtungskissens (202) in einem Winkel (230) auswärts abgewinkelt ist.

2. Rotationsmaschine (100) nach Anspruch 1, wobei der stationäre Dichtungskörper (200), das Stützelement (204), das Paar flexible Arme (208), das Dichtungskissen (202), die primäre Dichtungsverlängerung (216) und das Halteelement (220) der Sekundärdichtung (202) einstückig ausgebildet sind.

3. Rotationsmaschine (100) nach Anspruch 1, wobei die Primärdichtungsverlängerung (216) konfiguriert ist, um eine Axialkraft von der Sekundärdichtung (203) aufzunehmen, wenn die Sekundärdichtung (203) in dem Haltehohlraum (224) aufgenommen ist, sodass eine radiale Bewegung des Dichtungskissens (202) relativ zu dem stationären Dichtungskörper (200) gedämpft wird.

4. Rotationsmaschine (100) nach Anspruch 1, wobei der Winkel (230) in einem Bereich zwischen etwa null Grad und etwa fünfzehn Grad liegt.

5. Rotationsmaschine (100) nach Anspruch 1, wobei der Winkel (230) in einem Bereich zwischen etwa drei Grad und etwa acht Grad liegt.

6. Rotationsmaschine (100) nach Anspruch 1, wobei sich der stationäre Dichtungskörper (200) in Umfangsrichtung von einem ersten Ende (209) zu einem zweiten Ende (217) erstreckt und sich das Dichtungskissen (202) in Umfangsrichtung zwischen einem ersten Ende (205) und einem zweiten Ende (207) des stationären Dichtungskörpers (200) erstreckt.

## Revendications

1. Machine rotative (100) comprenant :
un rotor (106) ;
un carter (110) s'étendant circonférentiellement autour dudit rotor (106) ayant une surface externe ; et
un système d'étanchéité (127) disposé radialement vers l'intérieur dudit carter (110) et circonférentiellement autour dudit rotor (106), ledit système d'étanchéité (127) comprenant une pluralité de segments de joint d'étanchéité à film fluide (128), au moins un desdits segments de joint d'étanchéité à film fluide (128) comprenant :
un corps de joint d'étanchéité stationnaire s'étendant circonférentiellement (200) couplé audit carter (110) de la machine (100) et incluant une base radialement externe (201) et un élément de rétention de joint d'étanchéité secondaire (220) ;
un élément de support (204) s'étendant radialement vers l'intérieur à partir d'une partie généralement médiane de ladite base (201) jusqu'à une extrémité radialement interne (210) et s'étendant axialement le long de la base (201) ;
une paire de bras flexibles (208) s'étendant dans des directions circonférentiellement opposées à partir de ladite extrémité radialement interne (210) dudit élément de support (204) jusqu'à une extrémité circonférentiellement externe respective (214) ;
un patin de joint d'étanchéité s'étendant circonférentiellement (202) disposé radialement vers l'intérieur à partir de ladite paire de bras flexibles (208) et définissant un premier écartement (262) entre eux, ledit patin de joint d'étanchéité (202) couplé à ladite paire de bras flexibles (208) à proximité desdites extrémités circonférentiellement externes respectives (214) et incluant une extension d'étanchéité primaire (216) ; et
un joint d'étanchéité secondaire (203) couplé entre le corps de joint d'étanchéité stationnaire (200) et le patin de joint d'étanchéité (202), dans laquelle
le système d'étanchéité (127) est configuré pour contribuer à empêcher une fuite de fluide de travail à partir d'un chemin de fluide de travail (124) de la machine rotative (100) au-delà du patin de joint d'étanchéité (202) et du joint d'étanchéité secondaire (203), et entre le patin de joint d'étanchéité (202) et le rotor (106), le chemin de fluide de travail (124) étant canalisé à travers la machine rotative (100) dans une direction en aval (126) à travers le carter (110),
un premier chemin d'écoulement de fuite est défini entre une face radialement interne (244) du patin de joint d'étanchéité (202) et la surface externe du rotor (106),
une paire de troisièmes chemins d'écoulement (264) sont définis entre une surface radialement externe respective de chaque bras flexible (208) et une surface radialement vers l'intérieur dudit corps de joint d'étanchéité stationnaire (200) et sont séparés par l'élément de support (204),
l'extension d'étanchéité primaire (216) s'étend radialement vers l'extérieur et circonférentiellement à partir d'une partie médiane généralement axiale (218) du patin de joint d'étanchéité (202), axialement en aval des bras flexibles (208) et est configurée pour contribuer à empêcher une partie du fluide de travail de fuir au-delà du segment de joint d'étanchéité à film fluide (128) en passant à travers le premier écartement (262) et/ou les troisièmes chemins d'écoulement (264), en dirigeant la partie du fluide de travail vers le joint d'étanchéité secondaire (203),
le joint d'étanchéité secondaire (203) est dimensionné et profilé pour être retenu par, et pour s'étendre entre, l'élément de rétention de joint d'étanchéité secondaire (220) et l'extension d'étanchéité primaire (216),
l'élément de rétention de joint d'étanchéité secondaire (220) s'étend radialement vers l'intérieur à partir de la base (210) axialement adjacent à, et axialement en aval de, l'extension d'étanchéité primaire (216), de telle sorte que l'élément de rétention de joint d'étanchéité secondaire (220) et l'extension d'étanchéité primaire (216) coopèrent pour définir une cavité de rétention de joint d'étanchéité secondaire (224),
la cavité de rétention (224) est configurée pour recevoir le joint d'étanchéité secondaire (203) en son sein, le patin de joint d'étanchéité (202) inclut une rainure (234, 400) définie dans la face radialement interne (244) du patin de joint d'étanchéité (202) et configurée pour contribuer à retenir le fluide de travail entre le patin de joint d'étanchéité (202) et le rotor (106), **caractérisée en ce que**
soit la rainure (234, 400) est une rainure unique (234) qui s'étend radialement vers l'extérieur à partir de la face radialement interne (244),
la rainure unique (234) s'étend circonférentiellement sur une largeur de rainure (246), axialement sur une longueur de rainure (248), et radialement vers l'extérieur dans le patin de joint d'étanchéité (202) selon une profondeur de rainure (250), et
un canal d'alimentation (236) est défini dans la face radialement interne (244) du patin de joint d'étanchéité (202) en communication d'écoulement avec la rainure (234) et s'étend à travers, et axialement en aval de, une face d'attaque (212) du patin de joint d'étanchéité (202), ledit canal d'alimentation (236) configuré pour diriger un fluide venant d'en amont du patin de joint d'étanchéité (202) dans la rainure (234) ; soit **caractérisée en ce que**
la rainure (234, 400) est une pluralité de rainures inclinées (400) définies dans la face radialement interne (244) du patin de joint d'étanchéité (202) et s'étendant radialement vers l'extérieur à partir de la face radialement interne (244) jusqu'à une profondeur de rainure (408), et
chaque rainure inclinée (400) s'étendant à travers la face d'attaque (212) du patin de joint d'étanchéité (202) sur une largeur de rainure (404), de telle sorte qu'un fluide venant d'en amont du patin de joint d'étanchéité (202) est dirigé dans les rainures inclinées (400), dans laquelle
les rainures inclinées (400) s'étendent axialement en aval de la face d'attaque (212) du patin de joint d'étanchéité (202) selon un angle (402) par rapport à un axe longitudinal (215) du patin de joint d'étanchéité (202) ;
dans laquelle le patin de joint d'étanchéité (202) inclut une section divergente (226) s'étendant axialement en aval d'une autre partie généralement axialement médiane du patin de joint d'étanchéité (202) jusqu'à un bord de fuite (228) du patin de joint d'étanchéité (202), et dans laquelle
la section divergente (226) est inclinée vers l'extérieur par rapport à l'axe longitudinal (215) du patin de joint d'étanchéité (202) selon un angle (230).

2. Machine rotative (100) selon la revendication 1, dans laquelle ledit corps de joint d'étanchéité stationnaire (200), ledit élément de support (204), ladite paire de bras flexibles (208), ledit patin de joint d'étanchéité (202), ladite extension d'étanchéité primaire (216), et ledit élément de rétention (220) du joint d'étanchéité secondaire (202) sont formés d'un seul tenant.

3. Machine rotative (100) selon la revendication 1, dans laquelle ladite extension d'étanchéité primaire (216) est configurée pour recevoir une force axiale à partir du joint d'étanchéité secondaire (203) lorsque le joint d'étanchéité secondaire (203) est reçu dans ladite cavité de rétention (224), de telle sorte qu'un mouvement radial dudit patin de joint d'étanchéité (202) par rapport audit corps de joint d'étanchéité stationnaire (200) est amorti.

4. Machine rotative (100) selon la revendication 1, dans laquelle ledit angle (230) est dans une plage entre environ zéro degré et environ quinze degrés.

5. Machine rotative (100) selon la revendication 1, dans laquelle ledit angle (230) est dans une plage entre environ trois degrés et environ huit degrés.

6. Machine rotative (100) selon la revendication 1, dans laquelle ledit corps de joint d'étanchéité stationnaire (200) s'étend circonférentiellement d'une première extrémité (209) à une deuxième extrémité (217), et ledit patin de joint d'étanchéité (202) s'étend circonférentiellement entre une première extrémité (205) et une deuxième extrémité (207) dudit corps de joint d'étanchéité stationnaire (200).
